# EUROPEAN PATENT SPECIFICATION

(11) **EP 1 036 307 B1**
(45) Date of publication and mention of the grant of the patent: **07.02.2007**
(21) Application number: 98954623.9
(22) Date of filing: 18.11.1998
(51) Int. Cl.: G01B 9/02, G01D 5/26, G01D 5/353, G01H 9/00, G01V 1/22

(54) **INTERFEROMETRIC SENSING APPARATUS**
INTERFEROMETRISCHES DETEKTIONSGERÄT
APPAREIL DE DETECTION INTERFEROMETRIQUE

(30) Priority: 01.12.1997 GB 9725207
(43) Date of publication of application: 20.09.2000
(73) Proprietor: Geosensor Corporation, Houston, TX 77042-5326 (US)
(72) Inventor: KLUTH, Erhard, Lothar, Edgar, Alresford Hampshire SO24 9DD (GB); VARNHAM, Malcolm, Paul, Alresford Hampshire, SO24 9HF (GB)
(74) Representative: Jones, Graham Henry
(86) International application number: PCT/GB1998/003463
(87) International publication number: WO 1999/028713

(56) References cited:
- GB-A- 2 311 131
- US-A- 5 072 110

## Description

### FIELD OF THE INVENTION

This invention relates to interferometric sensing apparatus. In particular it relates to the configuration particularly suited to an efficient multiplexing arrangement for hydrophone arrays.

### BACKGROUND OF THE INVENTION

There is a demand in the oil and gas industry to improve the hit rate of locating recoverable reserves, and for increasing the percentage of oil and gas recovered from reservoirs. This has resulted in the demand for improvements in the quality of seismic surveys and in a demand for in-reservoir fluid-imaging techniques. Both these requirements demand large numbers of sensors networked together.

Similar requirements in defense applications have been met using time-division multiplexing techniques, involving interrogating a number of hydrophone elements using a single pulse of light. The technique relies on the fact that for each hydrophone along the path part of the pulse energy will be modified by the hydrophone and reflected. This results in a series of reflected light pulses returning to a detector at different times from the separate hydrophone elements. A limitation with this approach is that bandwidth is limited because of aliasing effects, which also restricts dynamic range. A further problem is that the number of elements addressable by a single source is relatively limited, leading to a fairly large number of expensive electro-optic sources required in the total system.

Apparatus suitable for the simultaneous acquisition of high-bandwidth information in very-long arrays was disclosed in a previous patent application GB2284256A. Wavelength division multiplexing was used in this apparatus such that hydrophone arrays could be interrogated with broadband light, and the information from each hydrophone returned at unique wavelengths. These wavelengths were separated and routed to different detectors. This apparatus has the drawback in that it utilizes a very-large number of detectors - one per hydrophone element. Nevertheless, it is probably the only way to achieve very-high bandwidth (500kHz) interrogation of very-short (1m) hydrophones. The apparatus is probably not cost-effective for very-large hydrophone arrays where the bandwidth requirement is relatively modest.

GB2311131 describes an interferometric sensing apparatus using a plurality of optical sources, each having a different central wavelength and being connected to a matched interferometer. Each matched interferometer is coupled to a coupler that couples power to a plurality of sensing interferometer arrays comprising fibre Bragg gratings.

Wavelength-addressable interferometers containing fiber Bragg grating pairs as reflectors are particularly attractive - particularly if ways can be found to eliminate, or dramatically reduce, cross-talk between hydrophones. Such cross-talk is inherent in many architectures.

Conventional electrical seismic streamers contain hydrophones which are grouped together to reduce tow noise. Such groups are typically 12.5m long and may contain 24 hydrophones. Optical hydrophone arrays can be constructed in a similar fashion, combining the outputs of groups of hydrophones in signal processing electronics. A more cost-effective solution is to replace each hydrophone group with a single hydrophone constructed in a linear fashion.

Streamers based on large arrays of optical hydrophones should preferably be cost-effective compared to conventional electronic arrays. Many hundreds of hydrophones are required in a single streamer and the technical specifications are demanding. There are large cost benefits associated with increasing the numbers of hydrophones per optical fiber in the streamer. Reducing the numbers of fibers in the streamer to 16 or less is particularly advantageous in that it reduces the complexities involved in joining lengths of streamer together. However, reducing the numbers of fibers in the streamer implies that there needs to be more hydrophones per fiber in the streamer which can lead to cross-talk between hydrophones.

### SUMMARY OF THE INVENTION

An aim of the present invention is to provide an efficient multiplexing arrangement for interferometric sensor arrays. This has particular relevance for seismic streamers comprising very-large arrays of optical hydrophones where the requirement of low cross-talk between the hydrophones exists and where the potential reduction of cable size and complexity offer important improvements.

Accordingly in one non-limiting embodiment of the present invention, there is provided an apparatus for interferometric sensing, which apparatus comprises a first broadband switched optical source, a first matched interferometer, a plurality of first sensing interferometers, and a detector: the first matched interferometer being such that it contains a first phase modulator; the apparatus being such that the optical path length difference in each of the first sensing interferometers is approximately equal to the optical path length difference in the first matched interferometer; the first sensing interferometers being such that each returns an optical interference signal to the detector at a substantially different wavelength; and the apparatus being such that the first broadband switched optical source is switched so as to emit optical radiation at wavelengths corresponding to each of the first sensing interferometers at different times.

The optical path length difference of the first sensing interferometers should be equal to the optical path length difference in the first matched interferometer to within the coherence length of the optical interference signal returned to the detector by each of the first sensing interferometers.

The first phase modulator may be a frequency shifter.

At least one of the first sensing interferometers may be a fiber optic sensing interferometer containing at least one optical fiber Bragg grating.

The fiber optic sensing interferometer may contain an optical fiber Bragg grating at each end of the fiber optic sensing interferometer. The optical fiber Bragg gratings may be chirped in opposite directions.

The first sensing interferometers may be optical fiber hydrophones. The optical fiber hydrophones may be constructed by winding an optical fiber around a compliant member and bonding the optical fiber to the compliant member. The optical fiber hydrophone may be constructed from an optical fiber with a compliant coating.

The apparatus may contain a depolarizer. The depolarizer may be a Lyott depolarizer, for example a Lyott depolarizer fabricated out of polarization maintaining optical fiber.

The apparatus may contain an optical circulator to direct optical radiation to the first sensing interferometers and to direct light returning from the first sensing interferometers to the detector.

The apparatus may contain an optical isolator to isolate the first broadband switched optical source from reflections.

The apparatus may contain an optical amplifier to improve signal to noise ratio.

The apparatus may contain an additional first sensing interferometer which reflects at substantially the same wavelength as one of the first sensing interferometers and where the path length difference in the additional first sensing interferometer is substantially equal to the path length difference in the first matched interferometer, the apparatus being such that the optical interference signals from the additional first sensing interferometer is not incident on the detector at the same time as the optical interference signal returning from any of the first sensing interferometers so that the first sensing interferometers and the additional first sensing interferometer can be interrogated using time division multiplexing.

The first broadband switched optical source may contain a light emitting diode, a superfluorescent fiber source, or a super-luminescent diode.

The first broadband switched optical source may contain at least one acousto-optic tunable filter.

The first broadband switched optical source may be scanned in wavelength.

The first broadband switched optical source may be stepped in wavelength either monotonically or otherwise.

The first broadband switched optical source may contain first and second acousto-optic tunable filters, in which the first acousto-optic tunable filter has its first sidebands substantially at the wavelength corresponding to the first wavelength zeros of the second acousto-optic tunable filter.

In a first aspect of the invention, the apparatus includes a second broadband switched optical source, a second matched interferometer, a coupler, and a plurality of second sensing interferometers: the coupler being such that it combines light from the first broadband switched optical source and the second broadband switched optical source; the second matched interferometer being such that it contains a second phase modulator; the apparatus being such that the optical path length difference in the second sensing interferometers is approximately equal to the optical path length difference in the second matched interferometer; the second sensing interferometers being such that each returns an optical interference signal to the detector at a different wavelength; and the apparatus being such that the second broadband switched optical source is switched so as to emit optical radiation at wavelengths corresponding to each of the second sensing interferometers at different times.

The path length difference of the second matched interferometer may be different from the path length difference of the first matched interferometer such that the visibility of interference signals from the first sensing interferometers interrogated by optical radiation from the second matched interferometer is very low. The modulation applied by the first phase modulator may be different from the modulation applied by the second phase modulator. Readout electronics may utilize the unique identifying characteristic of each phase modulator in order to demultiplex the signals from the first sensing interferometers from the signals from the second sensing interferometers.

### BRIEF DESCRIPTION OF THE DRAWINGS

Embodiments of the invention will now be described solely by way of example and with reference to the accompanying drawings in which:
Figure 1 shows interferometric sensing apparatus including a first broadband switched optical source;
Figure 2 shows an optical fiber sensing interferometer containing Bragg gratings;
Figure 3 shows a hydrophone element constructed by winding an optical fiber around a compliant member;
Figure 4 shows interferometric sensing apparatus containing an optical isolator, a depolarizer and an optical circulator;
Figure 5 shows interferometric sensing apparatus containing a polarization diversity receiver;
Figure 6 shows interferometric sensing apparatus containing additional first sensing interferometers;
Figure 7 shows a broadband switched optical source containing an acousto-optic tunable filter;
Figure 8 shows a broadband switched optical source containing first and second acousto-optic tunable filters;
Figure 9 shows the spectral response of the first and second acousto-optic tunable filters;
Figure 10 shows a broadband switched optical source containing an optical amplifier;
Figure 11 shows interferometric sensing apparatus containing four wavelength-switching gain blocks;
Figure 12 shows interferometric sensing apparatus containing polarization beam splitters;
Figure 13 shows interferometric sensing apparatus containing eight sensing subsystems each containing four sensing arrays;
Figure 14 shows interferometric sensing apparatus being deployed;
Figure 15 shows a preferred timing sequence for interrogating individual sensing interferometers;
Figure 16 shows a technique to reduce source noise;
Figure 17 shows a broadband switched optical source configured as a ring;
Figure 18 shows interferometric sensing apparatus utilizing switches in the readout electronics;
Figure 19 shows interferometric sensing apparatus utilizing switches in the readout electronics and polarization beam splitters;
Figure 20 shows interferometric sensing apparatus utilizing switches in the readout electronics and four sensing arrays per sensing subsystem;
Figure 21 shows interferometric sensing apparatus utilizing a wavelength division multiplexer;
Figure 22 shows interferometric sensing apparatus utilizing a wavelength division multiplexer and polarization beam splitters;
Figure 23 shows interferometric sensing apparatus utilizing a wavelength division multiplexer and four sensing arrays per sensing subsystem;
Figure 24 shows interferometric sensing apparatus utilizing acousto-optic tunable filters in the readout electronics;
Figure 25 shows interferometric sensing apparatus utilizing acousto-optic tunable filters in the readout electronics and polarization beam splitters; and
Figure 26 shows interferometric sensing apparatus utilizing acousto-optic tunable filters in the readout electronics and four sensing arrays per sensing subsystem.

### DETAILED DESCRIPTION OF PREFERRED EMBODIMENTS

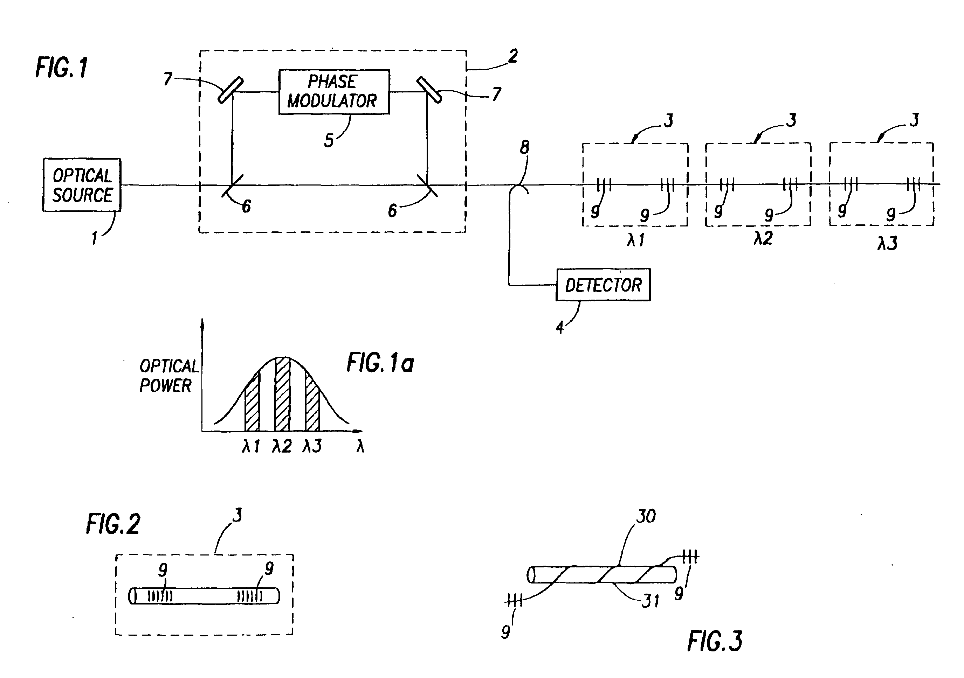

With reference to Figure 1, there is provided apparatus for interferometric sensing comprising a first broadband switched optical source **1,** a first matched interferometer **2,** a plurality of first sensing interferometers **3,** and a detector **4:** the first matched interferometer **2** being such that it contains a first phase modulator **5;** the apparatus being such that the optical path length difference in each of the first sensing interferometers **3** is approximately equal to the optical path length difference in the first matched interferometer **2;** the first sensing interferometers **3** being such that each returns an optical interference signal to the detector **4** at a substantially different wavelength; and the apparatus being such that the first broadband switched optical source **1** is switched so as to emit optical radiation at wavelengths corresponding to each of the first sensing interferometers **3** at different times.

The first matched interferometer **2** is shown in bulk optics form constructed from half-wave plates **6** and mirrors **7.**

A coupler **8** is shown which directs optical radiation from the first broadband switched optical source **1** to the first sensing interferometers **3,** and directs optical radiation from the first sensing interferometers **3** to the detector **4.**

The phase modulator **5** may be a frequency shifter such as an acousto-optic modulator or a fiber-optic frequency shifter. Alternatively, phase modulators constructed out of integrated optics or other electro-optic crystals can be used.

The first sensing interferometers **3** are shown constructed using optical fiber Bragg gratings **9**. The optical path length difference in the first sensing interferometers **3** is twice the optical path length between the two optical fiber Bragg gratings **9**. This is because the optical interference signal returned by each of the first sensing interferometers **3** has two components (one from each optical fiber Bragg grating **9)** separated by an optical path length difference equal to the round-trip optical path length between the two optical fiber Bragg gratings **9**. The optical fiber between the two optical fiber Bragg gratings **9** may be polarization maintaining optical fiber in order to reduce polarization fading in the apparatus.

The optical fiber Bragg gratings 9 reflect light at wavelengths which can be defined during manufacture. Thus each of the first sensing interferometers **3** can be designed such that each returns an optical interference signal to the detector **4** at a different wavelength. The spectral width of the reflected light from each of the first sensing interferometers **3** may be in the range of 0.1 nm to 10nm. The wavelength spacing between different first sensing interferometers **3** may be chosen such that the cross-talk between first sensing interferometers **3** is reduced to an acceptable level.

The optical fiber Bragg gratings **9** at either end of the fiber-optic sensing interferometers may be chirped in opposite directions as shown in Figure 2.

The first sensing interferometers **3** may be optical fiber hydrophones. The optical fiber hydrophones may be constructed as shown in Figure 3 by winding an optical fiber **30** around a compliant member **31** and bonding the optical fiber **30** to the compliant member **31.** Alternatively, the optical fiber hydrophones may be constructed by.winding optical fiber onto mandrels.

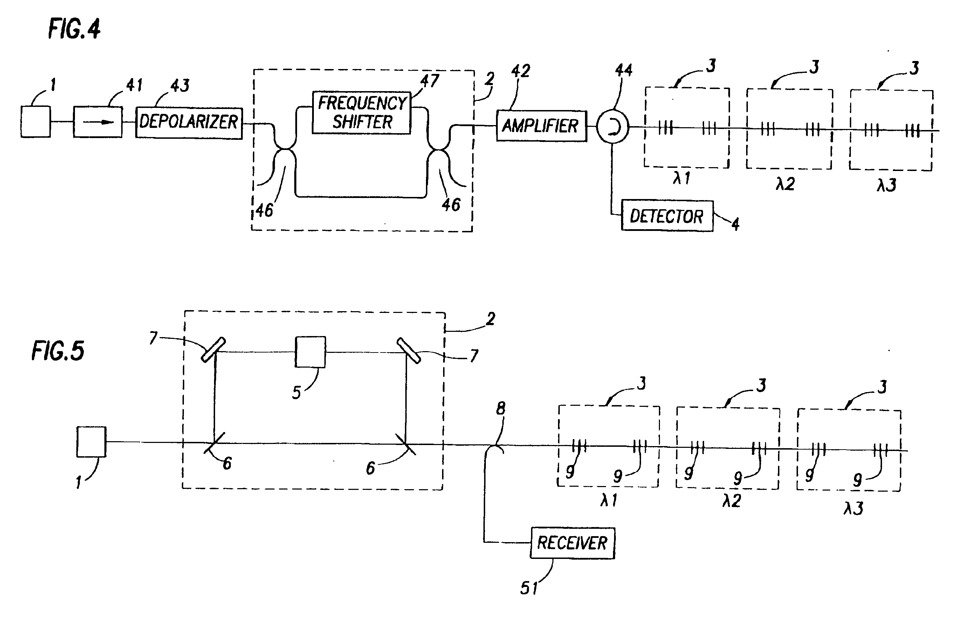

Figure 4 shows an embodiment of the invention which includes an optical isolator **41** to isolate the first broadband switched optical source **1** from reflections, an optical amplifier **42** to improve **signal** to noise ratio, a depolarizer **43** to reduce polarization fading, and an optical circulator **44** to direct optical radiation to the first sensing interferometers **3** and to direct light returning from the first sensing interferometers **3** to the detector **4.** The first matched interferometer **2** is shown constructed using optical fiber couplers 46 and a frequency shifter **47.** The optical fiber within the first matched interferometer **2** may be polarization maintaining fiber in order to reduce polarization fading in the apparatus. Polarization controllers may be provided within the first matched interferometer **2**.

The depolarizer **43** may be any convenient depolarizer such as a Lyott depolarizer. For fiber-optic sensing applications, a Lyott depolarizer can be conveniently constructed using two lengths of highly-birefringent optical fiber spliced together at 45 degrees, one length having twice the retardation of the other length. It is important that the Lyott depolarizer depolarizes the light incident on the detector **4** from each of the first sensing interferometers **3.** This is particularly important because the optical radiation returned from the first sensing interferometers **3** will have a longer coherence length than the optical radiation emitted by the first broadband switched optical source **1**.

The frequency shifter **47** may be an acousto-optic modulator or a fiber-optic frequency shifter.

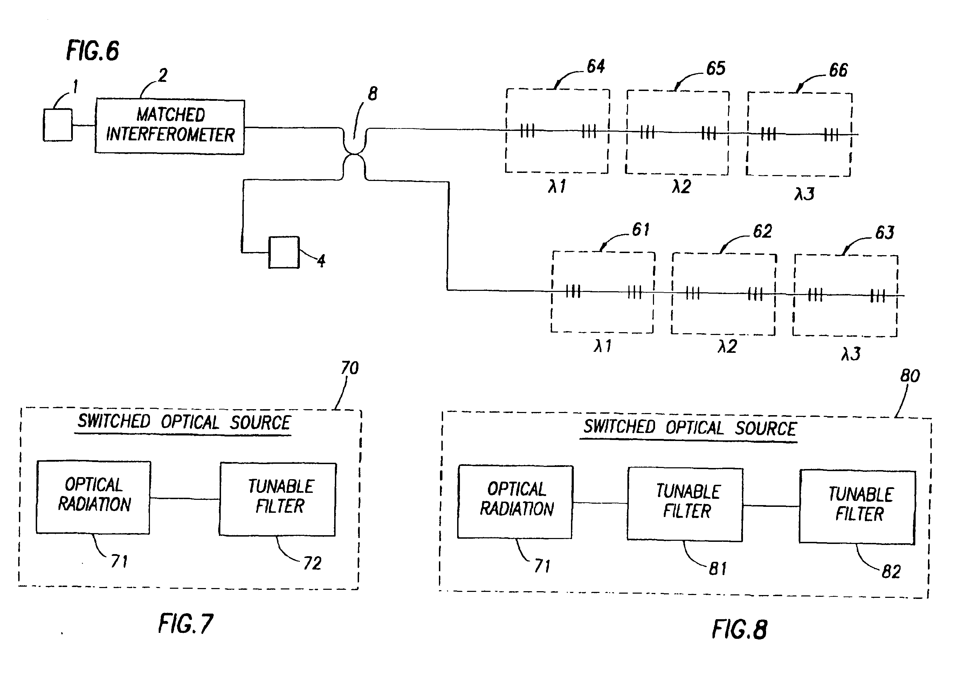

Figure 5 shows an embodiment of the invention in which the apparatus contains a polarization diversity receiver **51** such as is described by N.J. Frigo, A. Dandridge and A. B. Tveten in the paper entitled "Technique for elimination of polarization fading in fiber interferometers", Electronics Letters, 12th April 1984. The polarization diversity receiver **51** overcomes polarization-induced fading within the apparatus.

Figure 6 shows an embodiment of the invention in which the apparatus contains additional first sensing interferometers **61, 62** and **63.** Each additional first sensing interferometer **61, 62** and **63** returns optical interference signals to the detector **4** at substantially **different** wavelengths. Each additional first sensing interferometer **61, 62** and **63** returns optical interference signals to the detector **4** at substantially the same wavelength as one of the first sensing interferometers **64, 65** and **66.** The path length difference in each additional first sensing interferometer **61, 62** and **63** is substantially equal to the path length difference in the first matched interferometer **2.** The apparatus is designed such that the optical interference signals from any of the additional first sensing interferometers **61, 62** and **63** are not incident on the detector at the same time as the optical interference signals returning from any of the first sensing interferometers **64, 65** and **66** so that the signals returning from the first sensing interferometers **64, 65** and **66** can be separated from the signals returning from the additional first sensing interferometers **61, 62** and **63** in the time domain.

Figure 7 shows a design of a broadband switched optical source **70** which contains a broadband source of optical radiation **71** and an acousto-optic tunable filter **72.** The broadband source of optical radiation **71** may be a light emitting diode, a superfluorescent fiber source, or a super-luminescent diode. It may be preferable to use more than one acousto-optic tunable filter **72** in order to reduce the spectral bandwidth of the emitted optical radiation from the broadband switched optical source **70.**

A problem in certain applications with the design of the broadband switched optical source **70** shown in Figure 7 is that the optical spectrum may contain sidebands in addition to the desired broadband optical radiation. Currently available acousto-optic tunable filters have sidebands which contain approximately 5% of the throughput optical power. Such sidebands may lead to cross-coupling of the measurements between one or more of the first sensing interferometers **3.** It may therefore be preferable to design the array of the first sensing interferometers **3** such that crosstalk due to sidebands from the broadband switched optical source **70** are minimized by ensuring that the wavelength spacing of the first sensing interferometers **3** does not correspond to the wavelength offset of the sidebands.

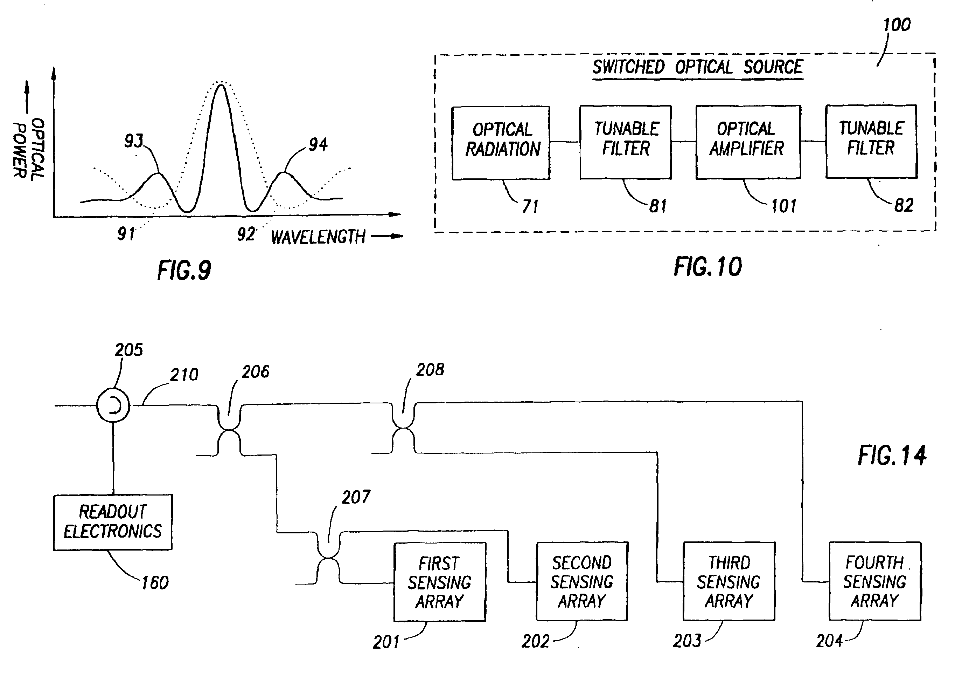

Figure 8 shows a broadband switched optical source **80** which contains a first acousto-optic tunable filter **81** and a second acousto-optical tunable filter **82.** The spectral outputs of the first acousto-optic tunable filter **81** and the second acousto-optic tunable filter **82** are shown in Figure 9. The first acousto-optical tunable filter **81** has its first sidebands **93** and **94** at substantially the wavelength corresponding to the first wavelength zeros **91** and **92** of the second acousto-optic tunable filter **82.** The result is a reduction of the optical power outside the spectral width of the broadband switched optical source **80.**

Figure 10 shows a design of a broadband switched optical source **100** which contains an optical amplifier **101.** The optical amplifier **101** may be an optical fiber amplifier such as an erbium-doped optical fiber amplifier. The broadband switched optical source **100** emits more optical power than the broadband switched optical source **80** owing to the incorporation of the optical amplifier **101.** Saturation of the gain medium within the optical amplifier **101** can be utilized in order to reduce the relative proportion of optical power emitted outside the wavelength range selected by the first and second acousto-optic tunable filters **81** and **82.**

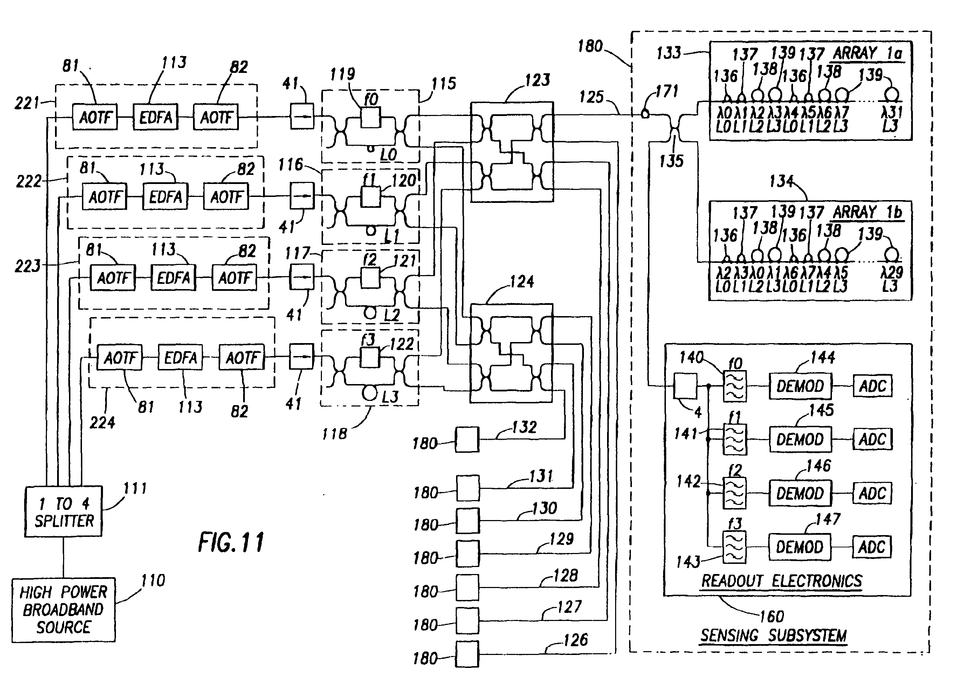

Figure 11 shows an embodiment of the invention. The output power from a high-power broadband source **110** is divided into four outputs by a splitter **111** and is then directed into first, second, third and fourth wavelength-switching gain blocks **221, 222, 223** and **224,** each comprising the first acousto-optical tunable filter **81,** the second acousto-optical tunable filter **82** and an erbium-doped fiber amplifier **113.** The output of the first wavelength-switching gain block **221** is connected via the optical isolator **41** to a first matched interferometer **115,** the output of the second wavelength-switching gain block **222** is connected via the optical isolator **41** to a second matched interferometer **116,** the output of the third wavelength-switching gain block **223** is connected via the optical isolator **41** to a third matched interferometer **117** and the output of the fourth wavelength-switching gain block **224** is connected via the optical isolator **41** to a fourth matched interferometer **118.**

The outputs of the first, second, third and fourth matched interferometers **115, 116, 117** and **118** are coupled together in first and second 4x4 couplers **123, 124** to provide eight outputs **125, 126, 127, 128, 129, 130, 131, 132** each of which contains a substantially equal contribution of the optical radiation from each of the first, second, third and fourth matched interferometers **115, 116, 117** and **118.**

Each of the eight outputs **125** to **132** is coupled into a separate sensing subsystem **180.** The sensing subsystems **180** each comprise a first and a second sensor array **133, 134,** a 2x2 optical fiber coupler **135,** and a readout electronics **160.** The optical fiber coupler **135** couples the respective outputs **125** to **132** to their respective first and second sensor arrays **133, 134** and couples the returned optical signals from the first and second sensor arrays **133** and **134** to the read-out electronics **160.**

Each of the sensing subsystems **180** contain first sensing interferometers **136,** second sensing interferometers **137,** third sensing interferometers **138,** and fourth sensing interferometers **139.** It should also be understood that the first and the second sensing interferometers may be located in different subarrays. The optical path length difference in the first sensing interferometers **136** is equal to the optical path length difference in the first matched interferometer **115,** the optical path length difference in the second sensing interferometers **137** is equal to the optical path length difference in the second matched interferometer **116,** the optical path length difference in the third sensing interferometers **138** is equal to the optical path length difference in the third matched interferometer **117,** and the optical path length difference in the fourth sensing interferometers **139** is equal to the optical path length difference in the fourth matched interferometer **118.**

The first, second, third and fourth sensing interferometers **136** to **139** are shared between first and second sensing arrays **133, 134** such that sensing interferometers which return optical interference signals to the detector **4** at the same wavelength are not located in the same sensing array.

It is preferred that the path length differences in the first, second, third and fourth matched interferometers **115, 116, 117** and **118** are different from each other by an amount much greater than the coherence length of the optical interference signals returned by the first, second, third and fourth sensing interferometers **136, 137, 138** and **139.** Achieving this condition will reduce cross-coupling between first, second, third and fourth sensing interferometers **136, 137, 138** and **139.**

The first, second, third and fourth matched interferometers **115, 116, 117** and **118** contain first, second, third and fourth frequency shifters **119, 120, 121** and **122** driven with different frequencies.

The apparatus can be operated such that a single interferometer from each of the first, second, third and fourth sensing interferometers **136, 137, 138, 139** can be interrogated simultaneously, the signals being separated in the electronics by electronic filtration in first, second, third and fourth filters **140, 141, 142, 143** followed by demodulation in the first, second, third and fourth demodulators **144, 145, 146, 147,** the filtration and demodulation being carried out with respect to the signals which drive the first, second, third and fourth frequency shifters **119, 120, 121, 122** respectively. It is important to ensure that the frequency shifts induced by the first, second, third and fourth frequency shifters **119, 120, 121** and **122** are sufficiently different that the signals output by the detector **4** resulting from the optical interference signals from the first, second, third and fourth sensing interferometers **136, 137, 138** and **139** can be separated in the frequency domain.

It is important to note that there are restrictions in the operation of the readout electronics **160** which result from the interaction of the frequency at which individual interferometric sensors are sampled and the bandwidth of the filters **140** to **143.** These restrictions may reduce the frequency at which wavelength channels can be switched from one to another, may increase the measurement noise, and may increase the cross-coupling between measurement channels.

The optical isolators **41** may not be necessary if isolators are already incorporated into the design of the erbium doped fiber amplifiers **113.**

In use, the first and second acousto optic tunable filters **81** and **82** in the first wavelength-switching gain block **221** are tuned so as to interrogate each of the first sensing interferometers **136** sequentially. The first and second acousto-optic tunable filters **81** and **82** in the second, third and fourth wavelength-switching gain block **222, 223** and **224** may be tuned to interrogate the second, third and fourth sensing interferometers **137, 138** and **139** respectively.

Although the first sensing interferometers can be interrogated sequentially, one may advantageously interrogate them randomly or pseudo-randomly to reduce cross-coupling between individual hydrophones. This is particularly advantageous when resulting signals in a seismic survey are "stacked", since such a (pseudo) random interrogation will lead to incoherent addition of the cross-couplings from different sensors which reduces cross-coupling effects.

It may be desirable to minimize transients in the detected signal from the detector **4** when demodulating individual channels. These transients can result from electronic switching transients and also from optical power transients which occur when one of the acousto-optic tunable filters is switched to a new channel. The electronic switching transients can be controlled by ensuring that all of the acousto-optical tunable filters **81, 82** are switched to new channels simultaneously. The effect of the resulting optical power transients may be reduced by ensuring that the returned optical signals from the respective sensing interferometers arrive at the detector **4** at the same time. The apparatus in Figure 11 includes a delay coil **171** which may be constructed from optical fiber and is an optional feature. At least one delay coil **171** may be inserted into a convenient position within the apparatus in order to set the timing of returned optical interference signals to the detector **4.**

It may be desirable to adjust the wavelengths selected by the first and second acousto-optical tunable filters **81** and **82** to ensure that they coincide with the wavelengths returned by the first, second, third and fourth sensing interferometers **136, 137, 138** and **139.** This can be achieved by scanning the wavelengths transmitted by the first and second acousto-optical tunable filters **81** and **82** and determining the position of maximum received signals in each readout electronics **160.** Greater measurement accuracy may be achievable by modulating the wavelength transmitted by the first and second acousto-optical tunable filters **81** and **82** and using phase-sensitive detection to provide a control signal to servo onto each center wavelength. It should be noted that the wavelength reflected by optical fiber Bragg gratings are sensitive to measurands such as temperature and strain - hence the apparatus is a distributed temperature and strain sensor when used in this mode.

Thus, this feature of the present invention offers a method of characterizing a seismic streamer system which includes multiple optical fiber Bragg gratings, in that the wavelength of the source may be tuned and the light returned from the Bragg grating monitored to ensure that the returned light falls within prescribed limits.

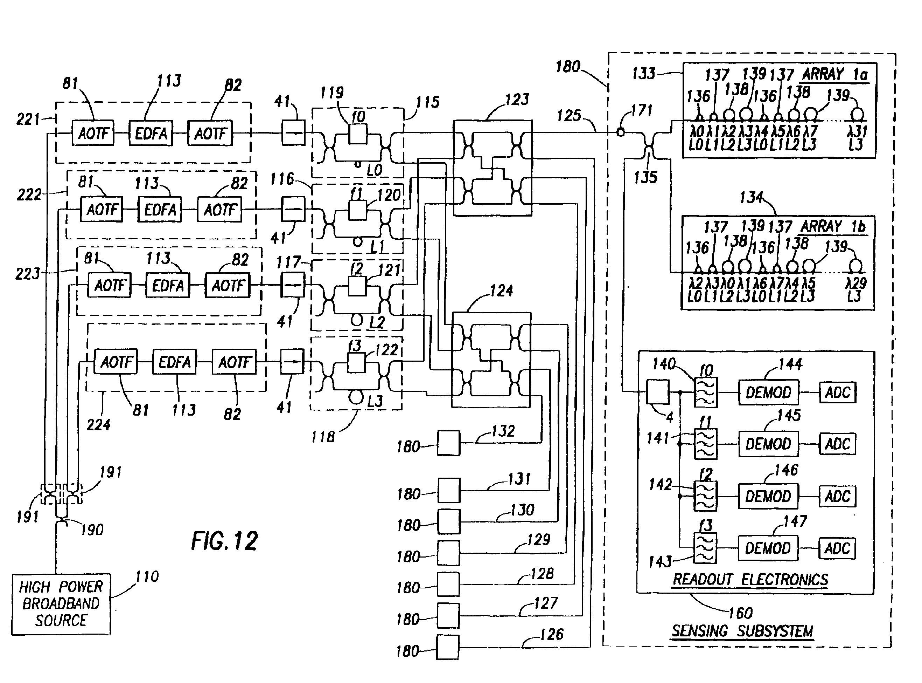

If the high-power broadband source **110** emits unpolarized light, then the splitter **111** may preferably be implemented as shown in Figure 12 with a 2x2 coupler **190** and two polarization beam splitters **191.** This is because typical acousto-optic tunable filters have a preferential transmission for one state of polarization. The coupler **190** and the polarization beam splitters **191** may be constructed with optical fiber.

The apparatus shown in Figure 11 can be implemented using the following commercially available components: a broadband optical source which emits unpolarized optical power with a spectral density greater than 100 mW/nm over a spectral range of around 40nm; acousto-optic tunable filters with optical bandwidths of 1nm to 1.5nm; and Erbium doped fiber amplifiers with an optical gain of between 20dB and 30dB.

The optical power is sufficient to achieve the required signal to noise ratio for seismic streamers based on optical fiber hydrophones. Each optical fiber within the seismic streamer could contain 32 hydrophones, each with approximately 1nm channel width.

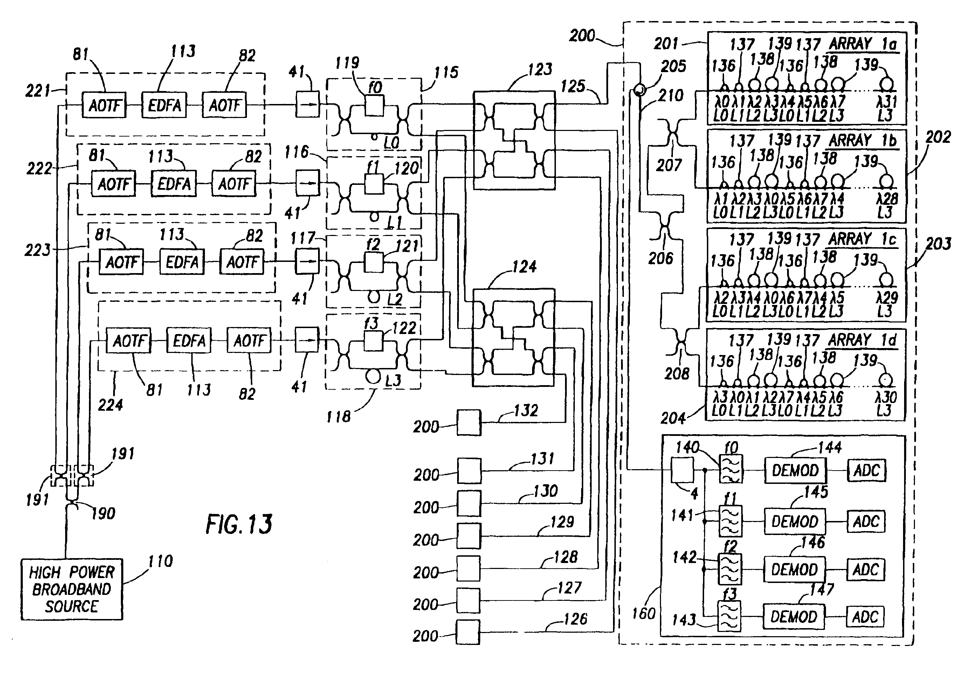

An embodiment which achieves even greater multiplexing efficiency is shown in Figure 13. The apparatus contains 8 sensing subsystems **200** each of which contains first, second, third and fourth sensing arrays **201, 202, 203, 204,** first, second and third optical fiber couplers **206, 207** and **208,** an optical fiber **210** and an optical circulator **205.**

The optical circulator **205** directs the optical power to the first, second, third and fourth sensing arrays **201, 202, 203, 204** via the optical fiber **210** and directs the returned signals to the readout electronics **160.** Use of the optical circulator **205** reduces the overall optical loss in the apparatus.

Each of the sensing subsystems **200** contains first sensing interferometers **136,** second sensing interferometers **137,** third sensing interferometers **138,** and fourth sensing interferometers **139.** The optical path length difference in the first sensing interferometers **136** is equal to the optical path length difference in the first matched interferometer **115** to within the coherence length of the returned optical power from each of the first sensing interferometers **136,** the optical path length difference in the second sensing interferometers **137** is equal to the optical path length difference in the second matched interferometer **116** to within the coherence length of the returned optical power from each of the second sensing interferometers **137,** the optical path length difference in the third sensing interferometers **138** is equal to the optical path length difference in the third matched interferometer **117** to within the coherence length of the returned optical power from each of the third sensing interferometers **138,** and the optical path length difference in the fourth sensing interferometers **139** is equal to the optical path length difference in the fourth matched interferometer **118** to within the coherence length of the returned optical power from each of the fourth sensing interferometers **139.**

The sensing subsystem **200** may be such that no two sensing interferometers operate at the same wavelength in any one of the first, second, third and fourth sensing arrays **201, 202, 203** and **204.** This feature reduces cross-talk which could occur with multiple reflections between sensing interferometers operating at the same wavelength.

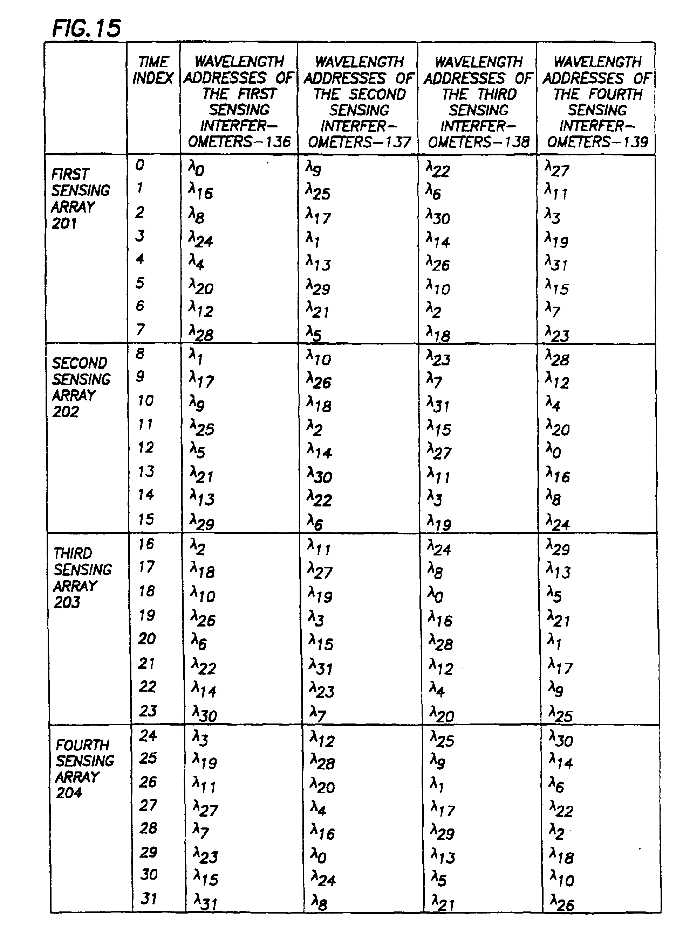

Figure 14 shows how the sensing subsystem **200** may be used. The optical fiber **210** between the optical circulator **205** and the first optical fiber coupler **206** may be many kilometers long. The arrays from several sensing subsystems **200** may be used in a single cable to form an essentially linear sensor cable. This is advantageous in seismic streamers because it reduces the number of fiber cables within the seismic streamer and therefore reduces the number of fiber to fiber connections in each joint between streamer sections. The apparatus shown in Figure 14 has four sets of 32 hydrophones per optical fiber **210.** It may be advantageous to include optical fiber delays within the sensing arrays in order to adjust the arrival times of optical signals returning from the sensing arrays.

Figure 15 shows a preferred timing sequence for interrogating the individual sensing interferometers within the apparatus shown in Figure 13. Time is indicated by the time index number. The vertical columns show the wavelength addresses of the first, second, third and fourth sensing interferometers **136, 137, 138** and **139** which are selected by the first, second, third and fourth wavelength switching gain blocks **221, 222, 223, 224** respectively. These wavelength channels are in ascending wavelength order *i.e.* 0, 1, 2, 3, 4 *etc.* The first, second, third and fourth sensing interferometers **136, 137, 138** and **139** are grouped together in the first, second, third and fourth sensing arrays **201, 202, 203, 204** as indicated in Figure 15. It is preferred that the first, second, third and fourth sensing interferometers **136, 137, 138, 139** are physically located along the sensing arrays in a consistent order. For example, the physical location may be in the order defined in Figure 15 going from left to right and then top to bottom i.e. (0, (9, (22, (27, (16, (25, (6, (11 *etc.* The wavelength channels are selected in groups of four at a time. Successive groups of four are selected in the order given by the time index number, which is cycled repeatedly from top to bottom.

The arrangement in Figure 15 is preferred because sensing interferometers with adjacent channel addresses within the same sensing array are interrogated by different matched interferometers thus reducing cross-coupling within each sensing array. Cross-coupling between sensing interferometers with adjacent channel addresses interrogated by the same matched interferometer can be reduced in the time domain by arranging that cross-coupled signals appear at the detector at different times. These cross-coupled signals can therefore be rejected by blanking (*i.e*. not sampling the optical signal when the cross-coupled power arrives at the detector **4)** or by changing the frequency shift induced by the frequency shifter within the respective matched interferometer so that the cross-coupling can be rejected electronically in the demodulation process.

One may also prefer to order the channels in ascending wavelength order to reduce the effects of unwanted out-of-hand reflections which are often at a higher level at shorter wavelengths than at longer wavelengths in typical Bragg gratings.

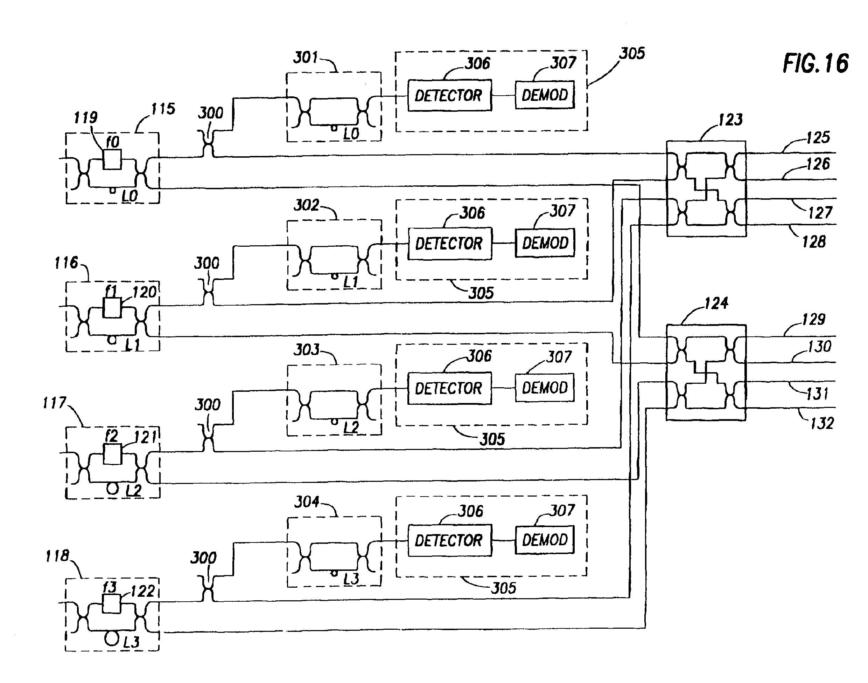

It may be preferable in the apparatus shown in Figures 11 to 13 to tap off a small amount of optical power from each of the first, second, third and fourth matched interferometers **115, 116, 117** and **118** with fiber couplers **300,** as shown in Figure 16. The optical radiation is then passed through first, second, third and fourth reference interferometers **301, 302, 303** and **304** having the same optical path length differences as the first, second, third and fourth matched interferometers **115, 116, 117** and **118** respectively. The resulting optical signals are passed to reference readout electronics **305** each containing a detector **306** and demodulator **307.** The detected signals are demodulated with respect to the frequency shift induced in the respective matched interferometer in order to generate reference phase signals. These reference phase signals will contain a measure of the source noise which can thus be subtracted from the resulting signals derived from each of the readout electronics **160** in the sensing subsystems **180.**

Additional first sensing interferometers, additional second sensing interferometers, additional third sensing interferometers and additional fourth sensing interferometers may be incorporated into the apparatus shown in Figure 13 and the signals from the additional sensing interferometers and the sensing interferometers operating in the same wavelength channels may be separated in the time domain using time division multiplexing. These additional sensing interferometers may be incorporated into the first, second, third and fourth sensing arrays **201, 202, 203, 204,** or implemented in additional sensing arrays.

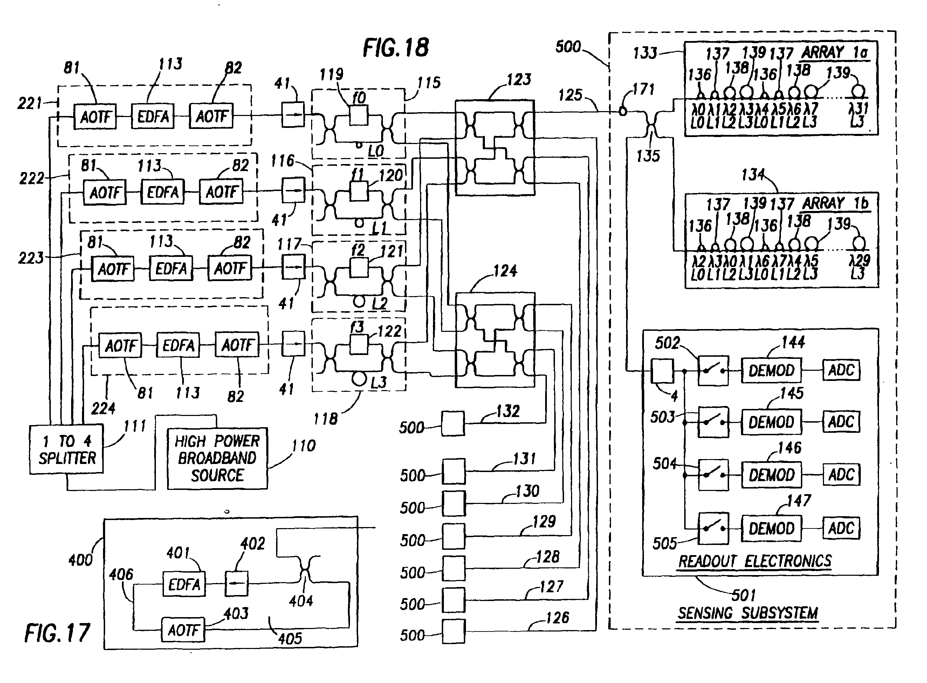

Figure 17 shows a broadband switched optical source **400** comprising an erbium doped fiber amplifier **401,** an optical isolator **402,** an acousto-optic tunable filter **403** and a coupler **404** connected together with optical fiber **406** to form a ring **405.** The switched optical broadband source **400** will emit broadband light over a spectral range governed by the filtering properties of the acousto-optical tunable filter **403** and the line-narrowing in the erbium doped fiber amplifier **401.** Care needs to be taken to ensure that the broadband switched optical source **400** does not lase or generate pulses of optical radiation. This can be achieved by reducing the optical power which circulates around the ring **405** by increase the proportion of optical power coupled out of the ring **405** by the coupler **404.** The broadband switched optical source **400** may be operated in a resonant mode by tuning the passband of the acousto-optic tunable filter **403** such that it tracks the frequency shift of the optical radiation transmitted around the ring **405.** The broadband switched optical source **400** can be designed to have a spectral width which is narrower than the broadband switched optical source **100** thus facilitating more wavelength channels to be incorporated into the apparatus. Polarization controllers may be added to the ring **405.** The potential disadvantage of this approach for certain applications is that source noise will increase as the spectral width reduces.

The limitations arising from the use of the readout electronics **160** are reduced in the apparatus shown in Figure 18 by using sensing subsystem **500** containing readout electronics **501.** The filters **140** have been replaced by first, second, third and fourth switches **502, 503, 504** and **505.** Although not strictly necessary, the first, second, third and fourth switches **502 - 505** can gate the signals output by the detector in order to remove transients and/or separate signals in the time domain. The apparatus may be operated such that signals returning from the first sensing interferometers **136** are gated by the first switch **502** and demodulated by the first demodulator **144,** the signals returning from the second sensing interferometers **137** are gated by the second switch **503** and demodulated by the second demodulator **145,** the signals returning from the third sensing interferometers **138** are gated by the third switch **504** and demodulated by the third demodulator **146,** and the signals returning from the fourth sensing interferometers **139** are gated by the fourth switch **505** and demodulated by the fourth demodulator **147.** In this manner, it is possible to separate the interrogation of the first, second, third and fourth sensing interferometers **136 - 139** in the time domain which may help to reduce cross-coupling between channels. Separating channels in this way provides simplicity in the overall system architecture, but is not strictly necessary. For example, the first, second, third and fourth demodulators **144 - 147** could address individual sensing interferometers randomly in time with the signals from individual sensing interferometers reconstructed downstream in processing electronics.

Depending on the system performance requirements and the performance of the first, second, third and fourth demodulators **144** to **147,** the apparatus may be operated without the first, second, third and fourth switches **502 - 505.**

It should also be noted that if the sampling frequency at which any one sensing interferometers is sampled is very much greater than the frequency shift induced by the first, second, third or fourth frequency shifters **119** to **122,** then the output from the detector **4** can be digitized directly by an analog to digital converter and the demodulation carried out using signal processing. This is also true for the more general case where the first, second, third and fourth frequency shifters are replaced by phase modulators and the sampling frequency is very much greater (for example a factor of four to eight times, but preferably twelve times or higher) than the modulation frequency applied by the phase modulators.

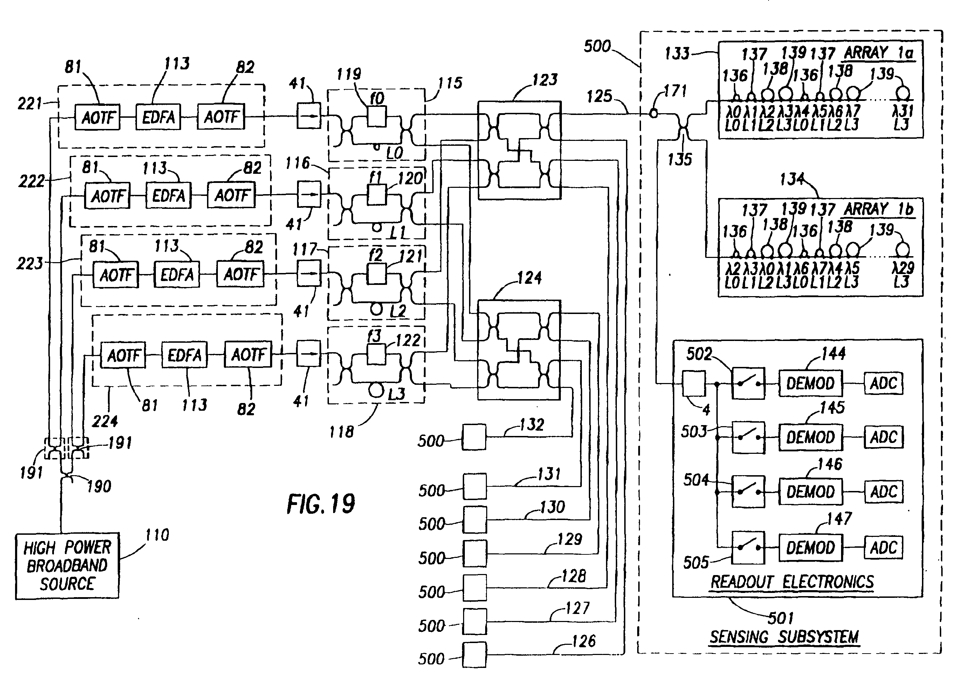

The readout electronics **501** may also be used in the apparatus in Figure 12, as shown in Figure 19, with the same advantages.

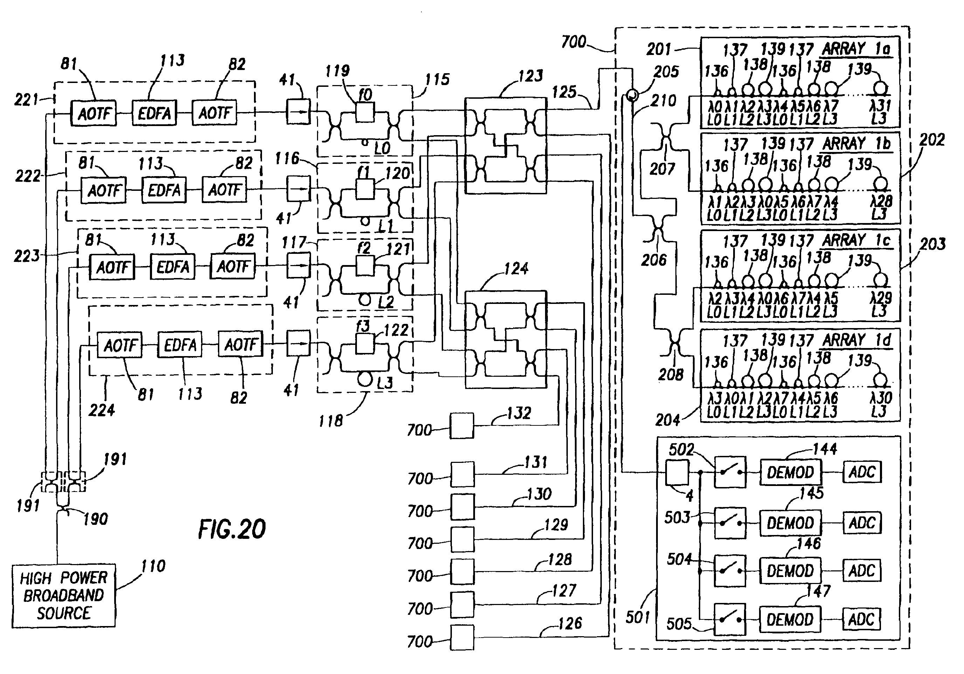

Figure 20 shows the readout electronics **501** being used in the sensing subsystem **700.**

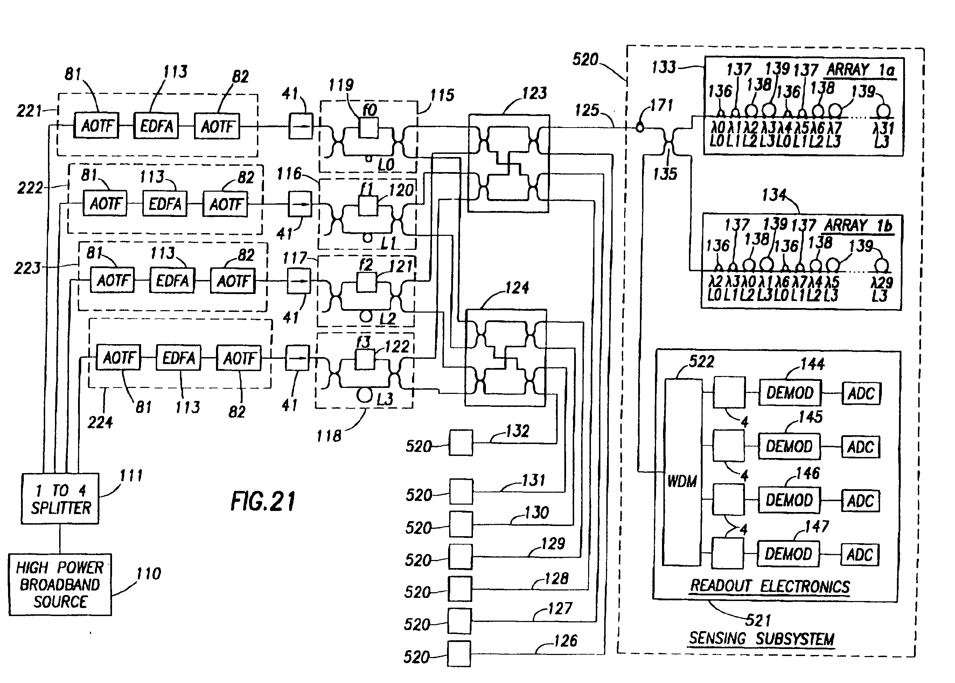

Figure 21 shows the use of a wavelength division multiplexer **522** in readout electronics **521** in a sensing subsystem **520** in order to simplify the electronic frequency spectrum incident on the first, second, third and fourth demodulators **144** to **147** and thereby to improve the performance of the overall system.

The wavelength division multiplexer **522** may utilize a blazed grating, or may be constructed from optical fiber gratings and optical circulators.

If passive wavelength division multiplexing is employed, and if the first, second, third and fourth sensing interferometers **136 - 139** operate over similar wavelength bands, then the first, second, third and fourth demodulators **144** to **147** will need to demodulate signals returning from each of the first, second, third and fourth sensing interferometers at different times.

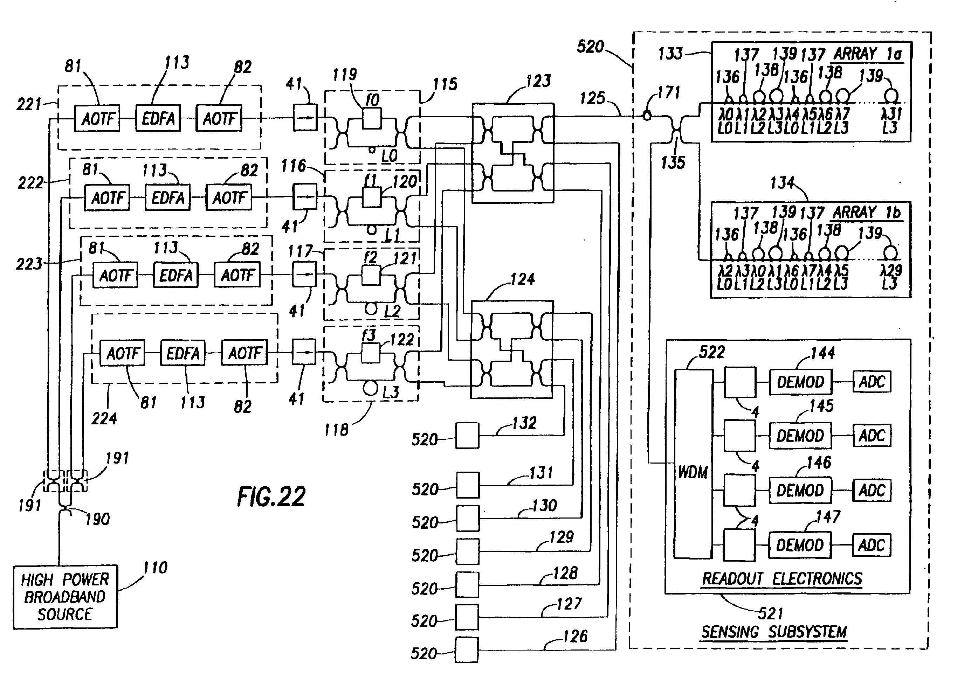

Figure 22 shows the sensing subsystem **520** being employed in an apparatus containing polarization beam splitters **191.**

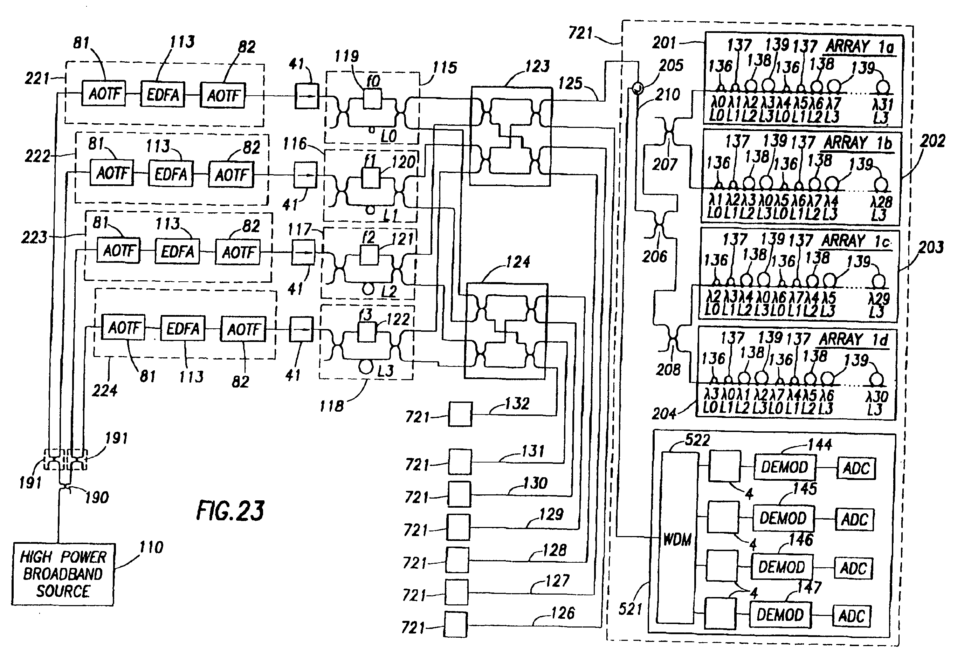

Figure 23 shows the wavelength division multiplexer **522** being used in sensing subsystem **720** containing readout electronics **521.**

Active wavelength division multiplexing may also be employed using, for example, acousto-optic tunable filters.

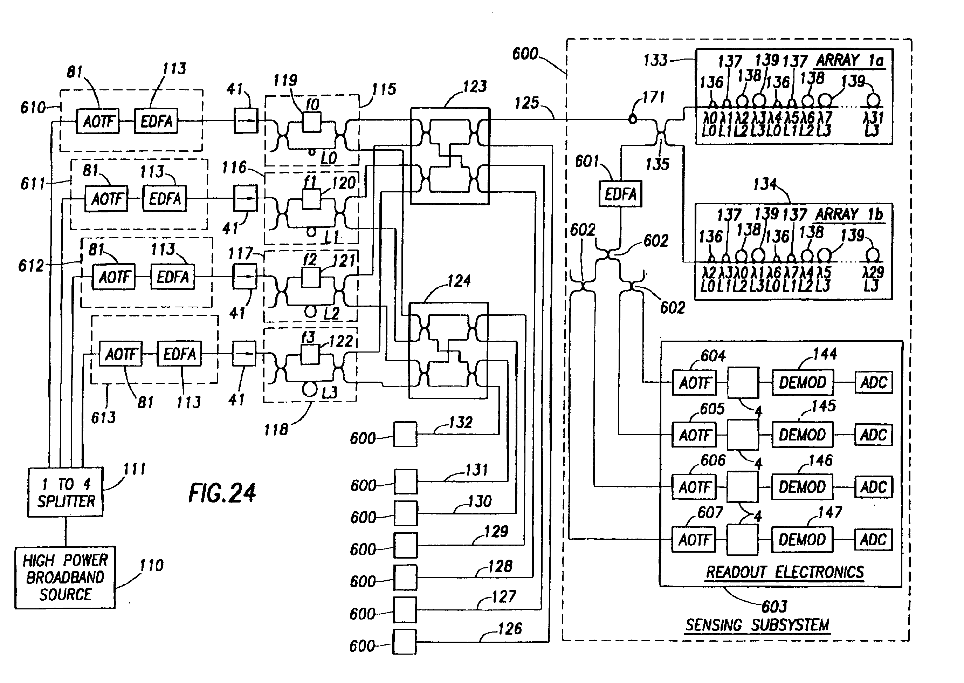

Figure 24 shows a preferred embodiment of the invention. The sensing subsystem **600** contains an optical amplifier **601,** optical fiber couplers **602** and readout electronics **603.** The optical amplifier **601** amplifies the returning signals from the first and second sensing arrays **133** and **134** and the amplified signals are divided by the optical fiber couplers **602** and filtered by first, second, third and fourth acousto-optical tunable filters **604 - 607.** The filtered signals are detected by the detector 4 and demodulated by first, second, third and fourth demodulators **144 - 147.** It is important that the first, second, third and fourth acousto-optical tunable filters **604** select the correct wavelength channel and that the first, second, third and fourth demodulators **144 - 147** are referenced to the frequency shift applied by the correct first, second, third or fourth frequency shifters **119** to **122.**

The acousto-optic tunable filters **604** to **607** may be implemented with the same characteristics as the second acousto-optic tunable filters **82** in order to reduce cross-coupling between channels.

Source noise may be reduced by incorporating the apparatus shown in Figure 16.

The first, second, third and fourth wavelength-switching gain blocks **610 - 613** are shown without the second acousto-optic tunable filters **82,** but improved performance may be gained using them.

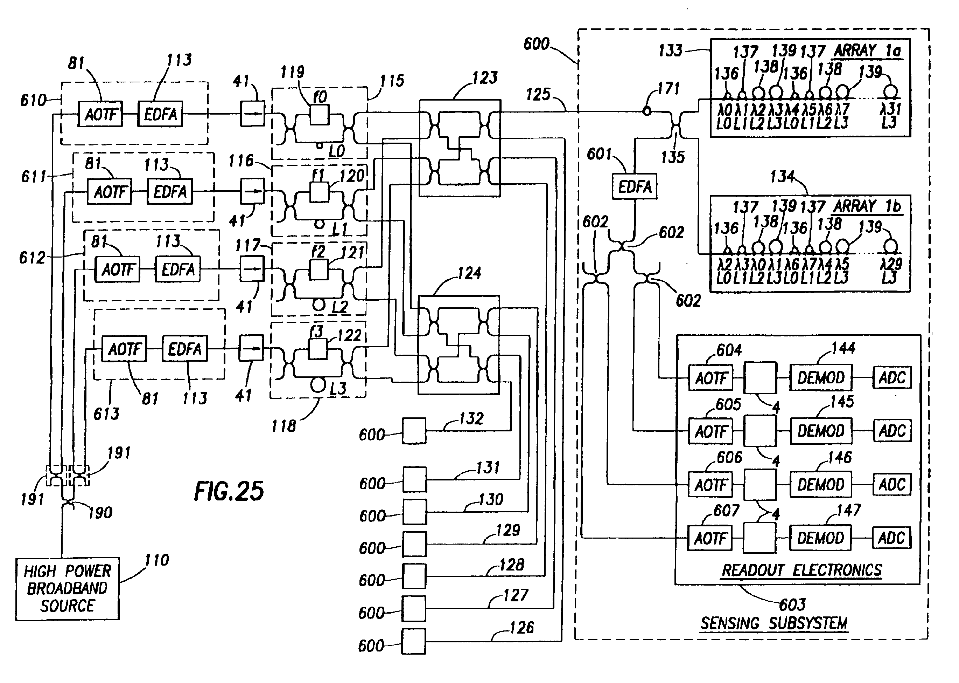

Figure 25 shows the sensing subsystem **600** being employed in an apparatus containing polarization beam splitters **191.**

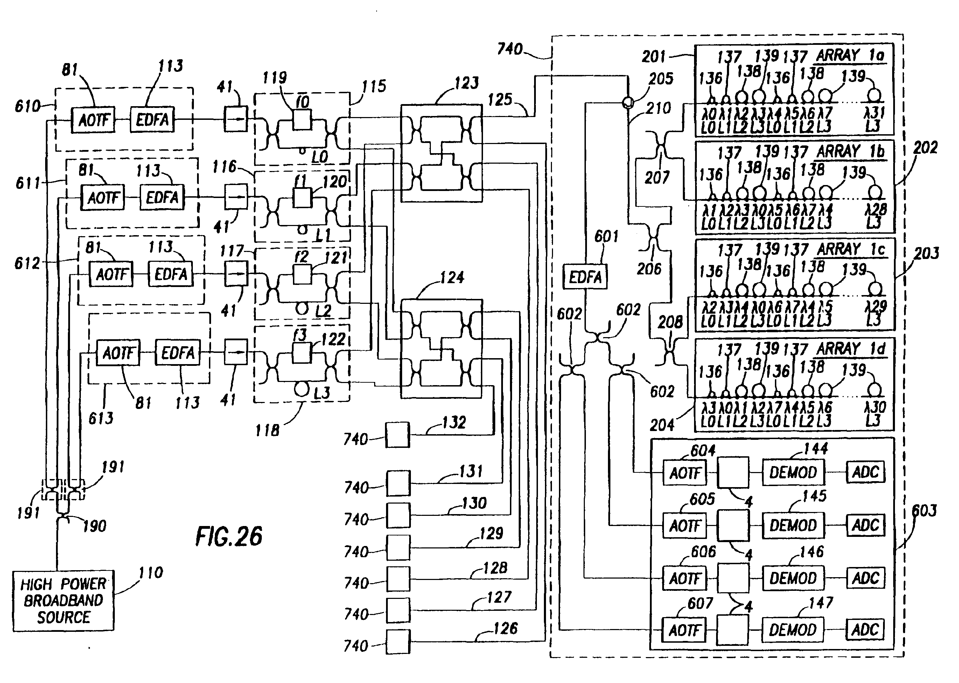

Figure 26 shows a preferred embodiment of the invention. A sensing subsystem **740** utilizes the readout electronics **603** which is believed to be particularly advantageous for application in the oil and gas industry for seismic surveys.

A particular advantage of the use of the acousto-optic tunable filters is that they can help reject cross-talk between individual interferometric sensors arising from non-linear effects such as Raman scattering in the system. Cross-coupling may also be reduced by varying the modulation frequencies applied by the frequency shifters within the respective matched interferometer so that the cross-coupling can be rejected electronically in the demodulation process.

If the sampling frequency for each of the sensing interferometers is much greater than the modulation frequency induced by the first, second, third and fourth frequency shifters **119** to **122,** then the outputs from the detectors 4 may be digitized directly with an analog to digital converter and the signals demodulated in a signal processor.

If the sampling frequency for each of the sensing interferometers is much less than the modulation frequency induced by the first, second, third, and fourth frequency shifters **119-122,** then the outputs from the detectors 4 may be frequency shifted using radiofrequency (RF) mixers prior to digitization and demodulation in a signal processor. Analogous techniques are currently employed in digital radios.

Although the embodiments shown in Figures 11, 12, 13, and 18-26 depict a plurality of wavelength switching gain blocks, such as for example **221, 222, 223** and **224,** the present invention can be implemented using a single wavelength switching gain block whose output light is coupled into a plurality of matched interferometers each having a unique optical path length difference and a unique modulation signal applied to their respective phase modulators. It would then be important to ensure that the signals returning at the same wavelength from each of the corresponding sensing interferometers (*i.e.,* those matched to their respective matched interferometers) are separated effectively at the detector. This can be achieved by ensuring that each sensing interferometer operating at the same wavelength is located at the same distance away from the source such that the optical signals return simultaneously. Alternatively, the sensing interferometers operating at the same wavelength could be located at different distances away from the source such that the returning signals at the same wavelength are separated in time.

It is to be appreciated that the embodiments of the invention described above with reference to the accompanying drawings have been given by way of example only and that modification and additional components may be provided to enhance the performance of the apparatus as claimed in the appended claims.

## Claims

1. Apparatus for interferometric sensing which apparatus comprises a first broadband switched optical source, a first matched interferometer, a plurality of first sensing interferometers, and a detector, wherein
the first matched interferometer contains a first phase modulator;
the apparatus being such that the optical path length difference in each of the first sensing interferometers is approximately equal to the optical path length difference in the first matched interferometer;
the first sensing interferometers being such that each returns an optical interference signal to the detector at a substantially different wavelength; and
the apparatus being such that the first broadband switched optical source is switched so as to emit optical radiation at wavelengths corresponding to each of the first sensing interferometers at different times.

2. Apparatus according to claim 1 wherein the first phase modulator is a frequency shifter.

3. Apparatus according to any one of the preceding claims wherein at least one of the first sensing interferometers is a fiber optic sensing interferometer containing at least one optical fiber Bragg grating.

4. Apparatus according to claim 3 wherein the fiber optic sensing interferometer contains an optical fiber Bragg grating at each end of the fiber optic sensing interferometer, with the optical fiber Bragg gratings chirped in opposite directions.

5. Apparatus according to any one of the preceding claims wherein at least one of the first sensing interferometers is an optical fiber hydrophone.

6. Apparatus according to claim 5 wherein the optical fiber hydrophone is constructed from an optical fiber twisted around a compliant member and bonded.

7. Apparatus according to any one of the preceding claims wherein the apparatus contains at least one depolarizer.

8. Apparatus according to any one of the preceding claims wherein the apparatus contains an optical circulator to direct optical radiation to the first sensing interferometers and to direct light returning from the first sensing interferometers to the detector.

9. Apparatus according to any one of the preceding claims further comprising an optical isolator to isolate the first broadband switched optical source from reflections.

10. Apparatus according to any one of the preceding claims further comprising an optical amplifier to improve signal to noise ratio.

11. Apparatus according to any one of the preceding claims wherein the apparatus contains an additional first sensing interferometer which reflects at substantially the same wavelength as one of the first sensing interferometers and where the path length difference in the additional first sensing interferometer is approximately equal to the path length difference in the first matched interferometer, the apparatus being such that the optical interference signals from the additional first sensing interferometer is not incident on the detector at the same time as the optical interference signal returning from any of the first sensing interferometers.

12. Apparatus according to any one of the preceding claims wherein the first broadband switched optical source contains at least one acousto-optic tunable filter.

13. Apparatus according to claim 12 further comprising first and second acousto-optic tunable filters, wherein the first acousto-optic tunable filter has its first wavelength zeros substantially at the wavelength corresponding to the first sidebands of the second acousto-optic tunable filter.

14. Apparatus according to any one of the preceding claims wherein the apparatus includes a second matched interferometer, a first coupler, a second coupler, and a plurality of second sensing interferometers:
the first coupler being such that it directs optical radiation from the first broadband switched optical source to both the first and the second matched interferometers;
the second matched interferometer being such that it contains a second phase modulator, the second matched interferometer further defining a second optical path length difference which is different from the optical path length difference in the first matched interferometer;
the second coupler being such that it combines light from the first matched interferometer and the second matched interferometer and directs the light into an array of the first and second sensing interferometers; and
the apparatus being such that the phase modulation applied by the first phase modulator is different than the modulation applied by the second phase modulator.

15. Apparatus according to claim 14 wherein the first and the second sensing interferometers are located in different sub arrays.

16. Apparatus according to any one of claims 1 - 13 wherein the apparatus contains a second broadband switched optical source, a second matched interferometer, a coupler, and a plurality of second sensing interferometers, with the second matched interferometer connected to the second broadband switched optical source, the second matched interferometer containing a second phase modulator, the coupler being such that it combines light from the first matched interferometer and the second matched interferometer and directs the combined light to the sensing interferometer arrays, the apparatus being such that the optical path length difference in the second sensing interferometers is approximately equal to the optical path length difference in the second matched interferometer, the second sensing interferometers being such that each returns an optical interference signal to the detector at a different wavelength, and the apparatus being such that the second broadband switched optical source is switched so as to emit optical radiation at wavelengths corresponding to each of the second sensing interferometers at different times.

17. Apparatus according to claim 16 wherein the coupler directs light returning from the first and second sensing interferometers to a detector.

18. Apparatus according to claim 16 or claim 17 wherein the differences in the path length difference in the first matched interferometer and the second matched interferometer is greater that the coherence length of the light which is returned to the detector.

## Patentansprüche

1. Vorrichtung zur interferometrischen Abtastung, wobei die Vorrichtung eine erste geschaltete optische Breitbandquelle, ein erstes angepaßtes Interferometer, mehrere erste Abtastinterferometer und einen Detektor aufweist, wobei das erste angepaßte Interferometer einen ersten Phasenmodulator enthält;
die Vorrichtung so gestaltet ist, daß die optische Weglängendifferenz in jedem der ersten Abtastinterferometer annähernd gleich der optischen Weglängendifferenz im ersten angepaßten Interferometer ist;
die ersten Abtastinterferometer so gestaltet sind, daß jedes ein optisches Interferenzsignal auf einer im wesentlichen unterschiedlichen Wellenlänge an den Detektor zurückgibt; und
die Vorrichtung so gestaltet ist, daß die erste geschaltete optische Breitbandquelle so geschaltet ist, daß sie optische Strahlung auf Wellenlängen, die jedem der ersten Abtastinterferometer entsprechen, zu unterschiedlichen Zeiten emittiert.

2. Vorrichtung nach Anspruch 1, wobei der erste Phasenmodulator ein Frequenzschieber ist.

3. Vorrichtung nach einem der vorhergehenden Ansprüche, wobei mindestens eines der ersten Abtastinterferometer ein faseroptisches Abtastinterferometer ist, das mindestens ein optisches Faser-Bragg-Gitter enthält.

4. Vorrichtung nach Anspruch 3, wobei das faseroptische Abtastinterferometer ein optisches Faser-Bragg-Gitter an jedem Ende des faseroptischen Abtastinterferometers enthält, wobei die optischen Faser-Bragg-Gitter ihre Gitterperiode in entgegengesetzte Richtungen ändern.

5. Vorrichtung nach einem der vorhergehenden Ansprüche, wobei mindestens eines der ersten Abtastinterferometer ein optisches Faserhydrophon ist.

6. Vorrichtung nach Anspruch 5, wobei das optische Faserhydrophon aus einer optischen Faser aufgebaut ist, die um ein nachgiebiges Element gewickelt und geklebt ist.

7. Vorrichtung nach einem der vorhergehenden Ansprüche, wobei die Vorrichtung mindestens einen Depolarisator enthält.

8. Vorrichtung nach einem der vorhergehenden Ansprüche, wobei die Vorrichtung einen optischen Zirkulator enthält, um optische Strahlung auf die ersten Abtastinterferometer zu richten und Licht, das von den ersten Abtastinterferometern zurückkommt, auf den Detektor zu richten.

9. Vorrichtung nach einem der vorhergehenden Ansprüche, die ferner einen optischen Isolator aufweist, um die erste geschaltete optische Breitbandquelle von Reflexionen zu isolieren.

10. Vorrichtung nach einem der vorhergehenden Ansprüche, die ferner einen optischen Verstärker aufweist, um das Signal-Rausch-Verhältnis zu verbessern.

11. Vorrichtung nach einem der vorhergehenden Ansprüche, wobei die Vorrichtung ein zusätzliches erstes Abtastinterferometer enthält, das bei im wesentlichen derselben Wellenlänge wie eines der ersten Abtastinterferometer reflektiert und wobei die Weglängendifferenz im zusätzlichen ersten Abtastinterferometer annähernd gleich der Weglängendifferenz im ersten angepaßten Interferometer ist, wobei die Vorrichtung so gestaltet ist, daß die optischen Interferenzsignale aus dem zusätzlichen ersten Abtastinterferometer nicht zur selben Zeit wie das optische Interferenzsignal, das von irgendeinem der ersten Abtastinterferometer zurückkommt, auf den Detektor trifft.

12. Vorrichtung nach einem der vorhergehenden Ansprüche, wobei die erste geschaltete optische Breitbandquelle mindestens einen akustooptischen abstimmbaren Filter enthält.

13. Vorrichtung nach Anspruch 12, die ferner erste und zweite akustooptische abstimmbare Filter aufweist, wobei der erste akustooptische abstimmbare Filter seine ersten Wellenlängennullpunkte im wesentlichen bei der Wellenlänge aufweist, die den ersten Seitenbändern des zweiten akustooptischen abstimmbaren Filters entsprechen.

14. Vorrichtung nach einem der vorhergehenden Ansprüche, wobei die Vorrichtung ein zweites angepaßtes Interferometer, einen ersten Koppler, einen zweiten Koppler, und mehrere zweite Abtastinterferometer aufweist;
wobei der erste Koppler so gestaltet ist, daß er optische Strahlung von der ersten geschalteten optischen Breitbandquelle sowohl auf das erste als auch das zweite angepaßte Interferometer richtet;
wobei das zweite angepaßte Interferometer so gestaltet ist, daß es einen zweiten Phasenmodulator enthält, wobei das zweite angepaßte Interferometer ferner eine zweite optische Weglängendifferenz definiert, die sich von der optischen Weglängendifferenz im ersten angepaßten Interferometer unterscheidet;
wobei der zweite Koppler so gestaltet ist, daß er Licht aus dem ersten angepaßten Interferometer und dem zweiten angepaßten Interferometer vereinigt und das Licht in eine Anordnung der ersten und zweiten Abtastinterferometer richtet; und
wobei die Vorrichtung so gestaltet ist, daß die Phasenmodulation, die durch den ersten Phasenmodulator angewendet wird, anders als die Modulation ist, die durch den zweiten Phasenmodulator angewendet wird.

15. Vorrichtung nach Anspruch 14, wobei die ersten und die zweiten Abtastinterferometer in unterschiedlichen Teilanordnungen angeordnet sind.

16. Vorrichtung nach einem der Ansprüche 1 - 13, wobei die Vorrichtung eine zweite geschaltete optische Breitbandquelle, ein zweites angepaßtes Interferometer, einen Koppler und mehrere zweite Abtastinterferometer enthält, wobei das zweite angepaßte Interferometer mit der zweiten geschalteten optischen Breitbandquelle verbunden ist, wobei das zweite angepaßte Interferometer einen zweiten Phasenmodulator enthält, wobei der Koppler so gestaltet ist, daß er Licht aus dem ersten angepaßten Interferometer und dem zweiten angepaßten Interferometer vereinigt und das vereinigte Licht auf die Abtastinterferometeranordnungen richtet, wobei die Vorrichtung so gestaltet ist, daß die optische Weglängendifferenz in den zweiten Abtastinterferometern annähernd gleich der optischen Weglängendifferenz im zweiten angepaßten Interferometer ist, wobei die zweiten Abtastinterferometer so gestaltet sind, daß jedes ein optisches Interferenzsignal bei einer anderen Wellenlänge an den Detektor zurückgibt, und wobei die Vorrichtung so gestaltet ist, daß die zweite geschaltete optische Breitbandquelle so geschaltet ist, daß sie optische Strahlung bei Wellenlängen, die jedem der zweiten Abtastinterferometern entsprechen, zu unterschiedlichen Zeiten emittiert.

17. Vorrichtung nach Anspruch 16, wobei der Koppler Licht, das von den ersten und zweiten Abtastinterferometern zurückkommt, auf den Detektor richtet.

18. Vorrichtung nach Anspruch 16 oder 17, wobei die Differenzen der Weglängendifferenz im ersten angepaßten Interferometer und im zweiten angepaßten Interferometer größer als die Kohärenzlänge des Lichts sind, das zum Detektor zurückgeworfen wird.

## Revendications

1. Appareil de détection interférométrique, lequel appareil comprend une première source optique commutée en large bande, un premier interféromètre accordé, plusieurs premiers interféromètres de détection et un détecteur, et dans lequel :
le premier interféromètre accordé comprend un premier modulateur de phase,
l'appareil étant tel que la différence de longueur des parcours optiques de chacun des premiers interféromètres de détection est approximativement égale à la différence de longueur des parcours optiques dans le premier interféromètre accordé,
les premiers interféromètres de détection étant tels que chacun renvoie au détecteur un signal d'interférence optique à une longueur d'onde essentiellement différente et
l'appareil étant tel que la première source optique commutée en large bande est commutée de manière à émettre à des instants différents un rayonnement optique à des longueurs d'ondes qui correspondent à chacun des premiers interféromètres de détection.

2. Appareil selon la revendication 1, dans lequel le premier modulateur de phase est un décaleur de fréquence.

3. Appareil selon l'une quelconque des revendications précédentes, dans lequel au moins l'un des premiers interféromètres de détection est un interféromètre de détection à fibres optiques qui contient au moins une grille de Bragg à fibres optiques.

4. Appareil selon la revendication 3, dans lequel l'interféromètre de détection à fibres optiques contient une grille de Bragg à fibres optiques à chaque extrémité de l'interféromètre de détection à fibres optiques, les grilles de Bragg de fibres optiques étant ménagées dans des directions opposées.

5. Appareil selon l'une quelconque des revendications précédentes, dans lequel au moins l'un des premiers interféromètres de détection est un hydrophone à fibres optiques.

6. Appareil selon la revendication 5, dans lequel l'hydrophone à fibres optiques est construit à partir d'une fibre optique torsadée autour d'un élément complémentaire et reliée à ce dernier.

7. Appareil selon l'une quelconque des revendications précédentes, dans lequel l'appareil contient au moins un dépolariseur.

8. Appareil selon l'une quelconque des revendications précédentes, dans lequel l'appareil contient un circulateur optique qui envoie le rayonnement optique vers les premiers interféromètres de détection et qui envoie vers le détecteur la lumière qui revient des premiers interféromètres.

9. Appareil selon l'une quelconque des revendications précédentes, qui comprend en outre un isolateur optique qui isole des réflexions la première source optique commutée en bande large.

10. Appareil selon l'une quelconque des revendications précédentes, qui comprend en outre un amplificateur otique qui améliore le rapport signal-bruit.

11. Appareil selon l'une quelconque des revendications précédentes, dans lequel l'appareil contient un premier interféromètre de détection supplémentaire qui réfléchit à essentiellement la même longueur d'onde que l'un des premiers interféromètres de détection et dans lequel la différence de longueur des parcours du premier interféromètre de détection supplémentaire est approximativement égale à la différence de longueur des parcours dans le premier interféromètre accordé, l'appareil étant tel que les signaux d'interférence optique délivrés par le premier interféromètre de détection supplémentaire n'aboutissent pas sur le détecteur au même moment que le signal d'interférence optique qui revient de l'un quelconque des premiers interféromètres de détection.

12. Appareil selon l'une quelconque des revendications précédentes, dans lequel la première source optique commutée en large bande contient au moins un filtre acousto-optique accordable.

13. Appareil selon la revendication 12, qui comprend en outre un premier et un deuxième filtre acoustico-optiques accordables, le premier filtre acoustico-optique accordable présentant ses premiers zéros de longueur d'onde essentiellement à la longueur d'onde qui correspond aux premières bandes latérales du deuxième filtre acoustico-optique accordable.

14. Appareil selon l'une quelconque des revendications précédentes, dans lequel l'appareil comprend un deuxième interféromètre accordé, un premier coupleur, un deuxième coupleur et plusieurs deuxièmes interféromètres de détection, et dans lequel :
le premier coupleur est tel qu'il envoie le rayonnement optique qui est délivré par la première source optique commutée en large bande à la fois aux premiers et aux deuxièmes interféromètres accordés,
le deuxième interféromètre accordé étant tel qu'il contient un deuxième modulateur de phase, le deuxième interféromètre accordé définissant en outre une deuxième différence de longueur des parcours optiques différente de la différence de longueur des parcours optiques du premier interféromètre accordé,
le deuxième coupleur étant tel qu'il combine la lumière qui provient du premier interféromètre accordé et celle qui provient du deuxième interféromètre accordé et envoie la lumière dans une batterie constituée des premiers et des deuxièmes interféromètres de détection et
l'appareil étant tel que la modulation de phase appliquée par le premier modulateur de phase est différente de la modulation appliquée par le deuxième modulateur de phase.

15. Appareil selon la revendication 14, dans lequel les premiers et les deuxièmes interféromètres de détection sont situés dans des sous-batteries différentes.

16. Appareil selon l'une quelconque des revendications 1 à 13, dans lequel l'appareil contient une deuxième source optique commutée en large bande, un deuxième interféromètre accordé, un coupleur et plusieurs deuxièmes interféromètres de détection, le deuxième interféromètre accordé étant relié à la deuxième source optique commutée en large bande, le deuxième interféromètre accordé contenant un deuxième modulateur de phase, le coupleur étant tel qu'il combine la lumière qui provient du premier interféromètre accordé et celle qui provient du deuxième interféromètre accordé et qu'il envoie la lumière combinée vers les batteries d'interféromètre de détection, l'appareil étant tel que la différence de longueur des parcours optiques dans les deuxièmes interféromètres de détection est approximativement égale à la différence de longueur des parcours optiques dans le deuxième interféromètre accordé, les deuxièmes interféromètres de détection étant tels que chacun renvoie un signal d'interférence optique au détecteur à une longueur d'onde différente, l'appareil étant tel que la deuxième source optique commutée en large bande est commutée de manière à émettre à des instants différents un rayonnement optique à des longueurs d'onde qui correspondent à chacun des deuxièmes interféromètres détection.

17. Appareil selon la revendication 16, dans lequel le coupleur envoie un détecteur la lumière qui revient des premiers et des deuxièmes interféromètres de détection.

18. Appareil selon la revendication 16 ou la revendication 17, dans lequel les différences entre la différence de longueur des parcours dans le premier interféromètre accordé et dans le deuxième interféromètre accordé sont plus grandes que la longueur de cohérence de la lumière renvoyée au détecteur.
